# EUROPEAN PATENT SPECIFICATION

(11) **EP 3 225 593 B1**
(45) Date of publication and mention of the grant of the patent: **25.04.2018**
(21) Application number: 17159701.6
(22) Date of filing: 07.03.2017
(51) Int. Cl.: C02F 1/00, A61K 9/00, A61K 9/08, C02F 1/68, B01F 3/04

(54) **HYDROGEN WATER MACHINE**
WASSERSTOFF-WASSERMASCHINE
APPAREIL À EAU HYDROGÉNÉE

(30) Priority: 01.04.2016 TW 105110558
(43) Date of publication of application: 04.10.2017
(73) Proprietor: Wu, Ching-Tsang, Xinbei City 236 (TW)
(72) Inventor: Wu, Ching-Tsang, Xinbei City 236 (TW)
(74) Representative: Cabinet Chaillot

(56) References cited:
- WO-A1-2009/098980
- WO-A1-2015/182606
- WO-A1-2016/023394

## Description

### BACKGROUND OF THE INVENTION

### 1. Field of the Invention

This invention relates to a machine capable of combining hydrogen with water and relates particularly to a hydrogen water machine.

### 2. Description of the Related Art

Nowadays, people gradually pay attention to how to keep in good health. Meanwhile, many researches indicate that water is a key to maintain our health because water occupies sixty percent (60%) of our weight. Further, water can carry oxygen and various nutrients to the whole body and discharge waste to balance the internal body. In view of this, some bring up an idea to combine elements which are beneficial for our health, such as hydrogen or oxygen, with the water, thereby providing a kind of healthful drinking water.

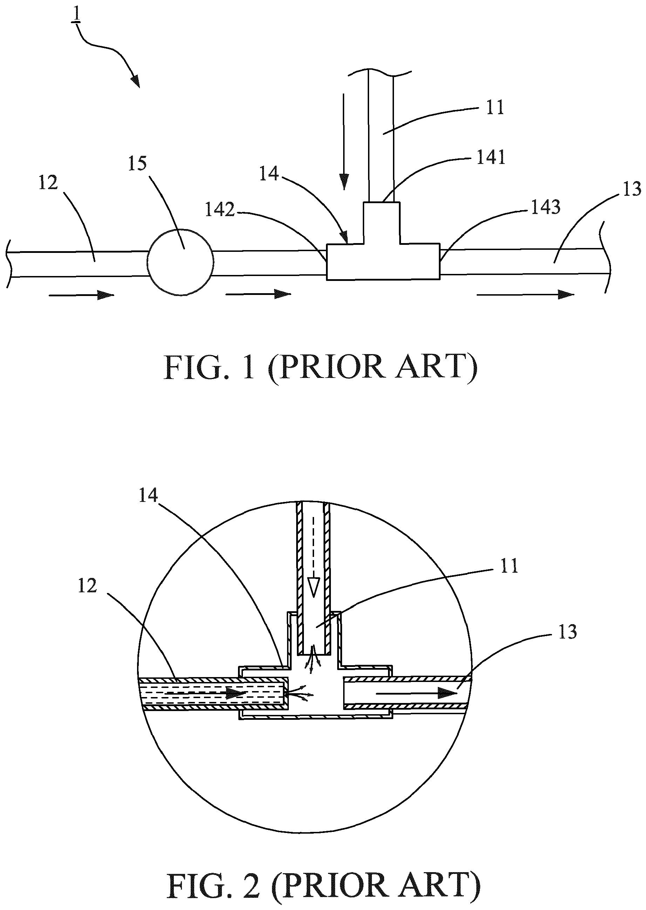

Here takes hydrogen as an example. Some researches indicate that hydrogen is the most abundant element in the atmosphere. Hydrogen occupies seventy-five percent (75%) of mass of all substances and is an important element which occupies sixty-three percent (63%) of what the human body needs. Further, three major body nutrients involve hydrogen. Hydrogen is not only an essential ingredient of human body but also a primary substance to construct protein for forming cells, carbohydrate as a heat-producing source and other important components. Hence, a combination of hydrogen and water is helpful to our heath, beyond doubt. Consequently, various kinds of hydrogen
water machines are produced to be marketed. WO2016023394 discloses a water source (200), a hydrogen source (100), a mixing passage (320), and atomiser (311). Referring to Fig. **1**, a conventional hydrogen water machine **1** includes a hydrogen pipe **11**, a water pipe **12**, a hydrogen water pipe **13**, a mixing device **14** connected among the hydrogen pipe **11**, the water pipe **12** and the hydrogen water pipe **13,** and a pressurizer **15** fitted on the water pipe **12.** The mixing device **14** is a T-shape pipe having a first access **141** connected with the hydrogen pipe **11,** a second access **142** connected with the water pipe **12,** and a third access **143** connected with the hydrogen water pipe **13** as shown in Fig.**1**. Referring to Fig. **2****,** in use of the hydrogen water machine **1,** the water of the water pipe **12** is compressed by the pressurizer **15** and then delivered to the mixing device **14.** Simultaneously, the hydrogen is delivered to the mixing device **14** through the hydrogen pipe **11.** Accordingly, the water and the hydrogen can mix together in the mixing device **14** to provide the hydrogen water. The hydrogen water is further served for drinking through the hydrogen water pipe **13.**

Although the conventional hydrogen water machine **1** can combine the hydrogen together with the water, it fails to increase the hydrogen concentration of the hydrogen water effectively and also causes the insufficient time of mixing the hydrogen with the water because the hydrogen is only blended with the water in the mixing device **14** briefly. Therefore, the hydrogen which is dissolved in the water lasts only for a short time. In other words, the hydrogen separates from the water quickly to result in a rapid reduction of the hydrogen concentration of the hydrogen water. Moreover, the longer the retention of the hydrogen water lasts, the lower the hydrogen concentration of the hydrogen water gets. Hence, the hydrogen water should be drunk as soon as the hydrogen water is provided, otherwise the hydrogen concentration of the hydrogen water will be reduced. Accordingly, it is an issue how to improve a mixing effect between the hydrogen and the water to further increase the hydrogen concentration of the hydrogen water and how to maintain the hydrogen concentration of the hydrogen water by reducing the separation of hydrogen from water without enlarging the volume of the hydrogen water machine **1.**

### SUMMARY OF THE INVENTION

The object of this invention is to provide a hydrogen water machine capable of providing a preferable mixing effect between hydrogen and water and further prolonging the time of dissolving the hydrogen in the water. The hydrogen water machine of this invention, as defined in claim 1, comprises a hydrogen generator (31) generating hydrogen, a water supplier (32) delivering water, and a mixing device (33) combining said hydrogen and said water, said hydrogen generator (31) having a hydrogen source (311) capable of generating hydrogen and a first duct (312) connected with said hydrogen source (311) for delivering said hydrogen, said water supplier (32) having a water source (321) for accommodating water and a second duct (322) connected with said water source (321) for delivering said water; characterized in that said mixing device (33) having a third duct (331) with a mixing passage (3311) communicating with said first duct (312) and said second duct (322) respectively for allowing said hydrogen of said first duct (312) mixing with said water of said second duct (322) in said mixing passage (3311) to generate semi-finished hydrogen water, a pressurizer (332) mounted on a first section of said third duct (331) downstream of said mixing passage (3311) to subject said semi-finished hydrogen water to pressurization that allows said hydrogen to be dissolved in said water, a first atomizer (333) disposed on a second section of said third duct (331)downstream of said first section to subject said semi-finished hydrogen water to atomization that increases an amount of dissolving said hydrogen in said water for generating hydrogen water, and a fourth duct (334) connected with said first atomizer (333) and downstream of said second section of said third duct (331) for receiving and delivering said hydrogen water, a recirculation pipe (34) being connected between said second duct (322) and said fourth duct (334) to allow part of said hydrogen water in said fourth duct (334) to enter said second duct (322) through said recirculation pipe (34) for reusing. Owing to the recirculation, the water is capable of being combined with the hydrogen for a longer time, thereby increasing the hydrogen concentration of the hydrogen water effectively and extend the time of dissolving the hydrogen in the water to achieve a preferable mixing effect.

Preferably, a pipe diameter of the recirculation pipe is smaller than a duct diameter of the fourth duct.

Preferably, the first atomizer has at least two mixing units fitted on the third duct. The mixing units are spaced apart from each other. Each mixing unit has a connected passage. A passage diameter of the connected passage is smaller than a diameter of the third duct.

Preferably, the hydrogen water machine further has a second atomizer fitted on the recirculation pipe for nebulizing said hydrogen water in recirculation pipe, thereby carrying the hydrogen water processed by the second atomizer to the second duct through the recirculation pipe.

### BRIEF DESCRIPTION OF THE DRAWINGS

Fig. **1** is a schematic view showing a conventional hydrogen water machine;
Fig. **2** is a cross-sectional view showing how the conventional hydrogen water machine operates;
Fig. **3** is a schematic view showing a first preferred embodiment of this invention;
Fig. **4** is a cross-sectional view showing the first preferred embodiment of this invention;
Fig. **5** is a cross-sectional view showing how the first preferred embodiment operates;
Fig. **6** is a cross-sectional view showing a second preferred embodiment of this invention;
Fig. **7** is an enlarged view showing that two mixing units are fitted on the third duct; and
Fig. **8** is a cross-sectional view showing how the second preferred

### embodiment operates.

### DETAILED DESCRIPTION OF THE PREFERRED EMBODIMENTS

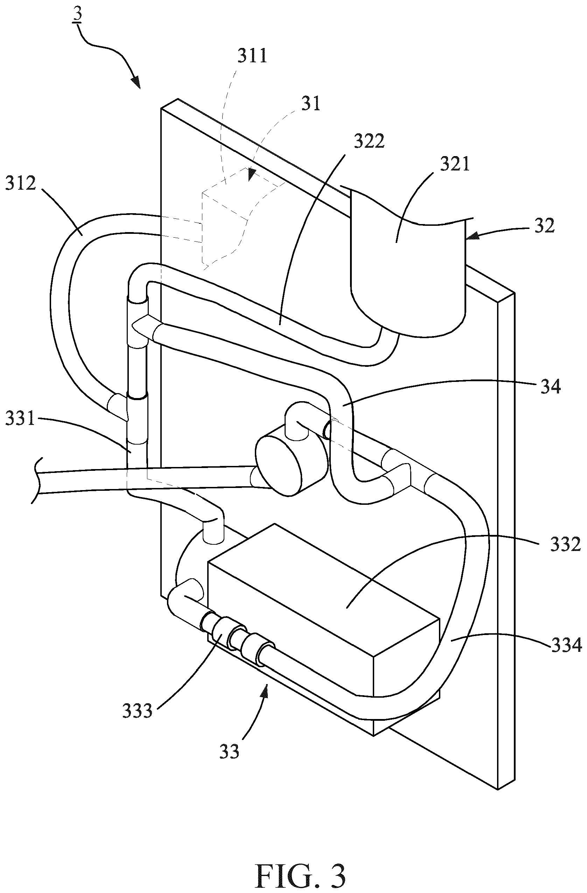

Referring to Fig. **3****,** a first preferred embodiment of a hydrogen water machine **3** comprises a hydrogen generator **31,** a water supplier **32,** a mixing device **33** connected between the hydrogen generator **31** and the water supplier **32,** and a recirculation pipe **34** connected between the mixing device **33** and the water supplier **32.** The hydrogen generator **31** has a hydrogen source **311** capable of producing hydrogen and a first duct **312** connected with the hydrogen source **311.** The first duct **312** is aimed at carrying the hydrogen. The water supplier **32** has a water source **321** containing water and a second duct **322** connected with the water source **321.** The second duct **322** is aimed at carrying the water.

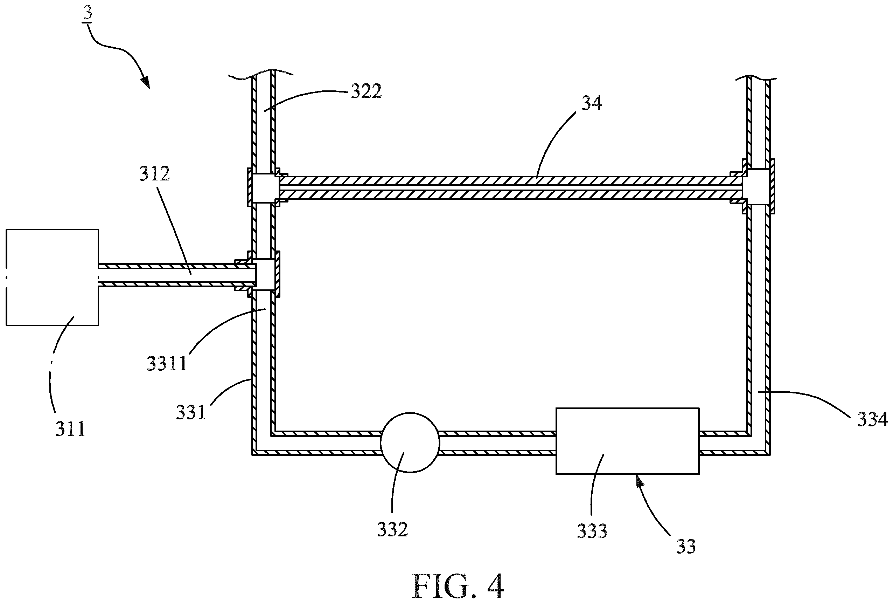

Referring to Fig. **4****,** the mixing device **33** has a third duct **331** connected between the first duct **312** and the second duct **322,** the hydrogen of the first duct **312** and the water of the second duct **322** converging in the third duct **331,** a pressurizer **332** connected with the third duct **331,** a first atomizer **333** connected with the pressurizer **332,** and a fourth duct **334** connected with the first atomizer **333.** The fourth duct **334** is aimed at carrying hydrogen water which is processed by the first atomizer **333.** Further, a mixing passage **3311** is formed within the third duct **331.** The hydrogen of the first duct **312** is blended with the water of the second duct **322** in the mixing passage **3311** to form semi-finished hydrogen water. Meanwhile, the semi-finished hydrogen water is applied pressure by the pressurizer **332** in order to dissolve the hydrogen in the water. Moreover, the semi-finished hydrogen water is nebulized by the first atomizer **333** in order to enlarge an amount of dissolving the hydrogen in the water and enhance the stability of the hydrogen dissolved in the water. Hence, the hydrogen water is ready for served. It is noted that part of the hydrogen water in the fourth duct **334** move into the second duct **322** through the recirculation pipe **34** because the recirculation pipe **34** is fitted between the second duct **322** of the water supplier **32** and the fourth duct **334** of the mixing device **33.** Furthermore, the recirculation displacement or amount of the hydrogen water can be controlled by adjusting a pipe diameter of the recirculation pipe **34** to be smaller than a duct diameter of the fourth duct **334,** as shown in Fig. **4****.** For instance, if the user wants to recirculate one third (1/3) hydrogen water, the pipe diameter of the recirculation pipe **34** can be set as one third (1/3) of the duct diameter of the fourth duct **334.**

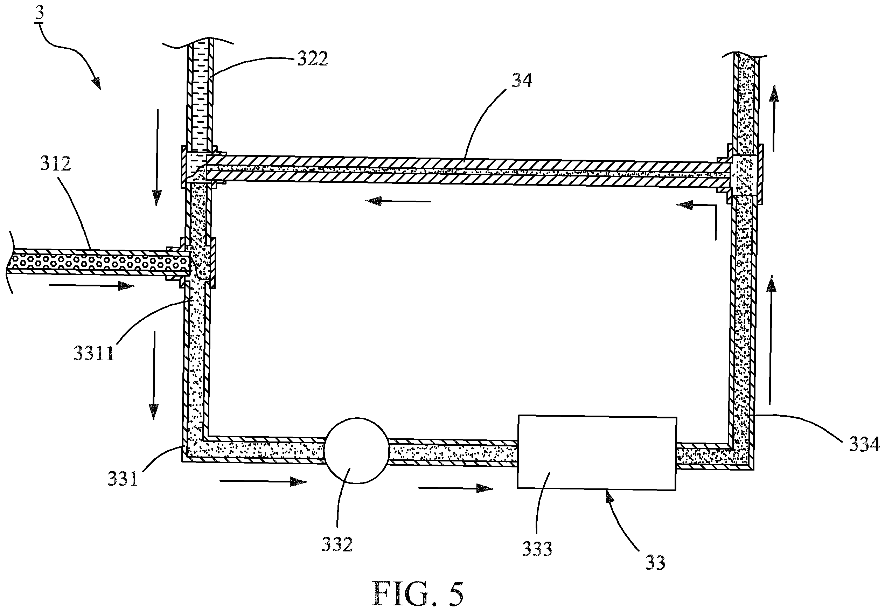

Referring to Fig. **5****,** in use of the hydrogen water machine **3,** the water is delivered by the second duct **322,** and the hydrogen is delivered by the first duct **312.** The pressurizer **332,** briefly shown, imparts a pressure to both of the second and first ducts **322, 312** to result in a drawing or sucking effect within the third duct **331.** Hence, the water and the hydrogen are delivered to the third duct **331** simultaneously to form semi-finished hydrogen water. In other words, the hydrogen is in contact with the water at an early stage in the third duct **331.** Further, the pressurizer **332** keeps giving the pressure in order to dissolve the hydrogen in the water. Then, the semi-finished hydrogen water is delivered to the first atomizer **333** of the mixing device **33** and nebulized under the high pressure in order to increase the amount of dissolving the hydrogen in the water. Accordingly, the hydrogen water contained the high content of the hydrogen is delivered through the fourth duct **334** and available for the user to drink. Owing to the connection between the recirculation pipe **34** and the second duct **322** and the drawing or sucking effect within the third duct **331** that is caused by the pressurizer **332,** part of the hydrogen water in the fourth duct **334** can enter the second duct **322.** The part of the hydrogen water and the water in the second duct **322** is then carried to the third duct **331** together in order to be mixed with the hydrogen again. Hence, the continuous recirculation of the part of the hydrogen water prolongs the mixing time between the hydrogen and the water, thereby increasing the hydrogen concentration of the hydrogen water, extending the time of dissolving the hydrogen in the water and steading the hydrogen concentration of the hydrogen water after the hydrogen water is produced.

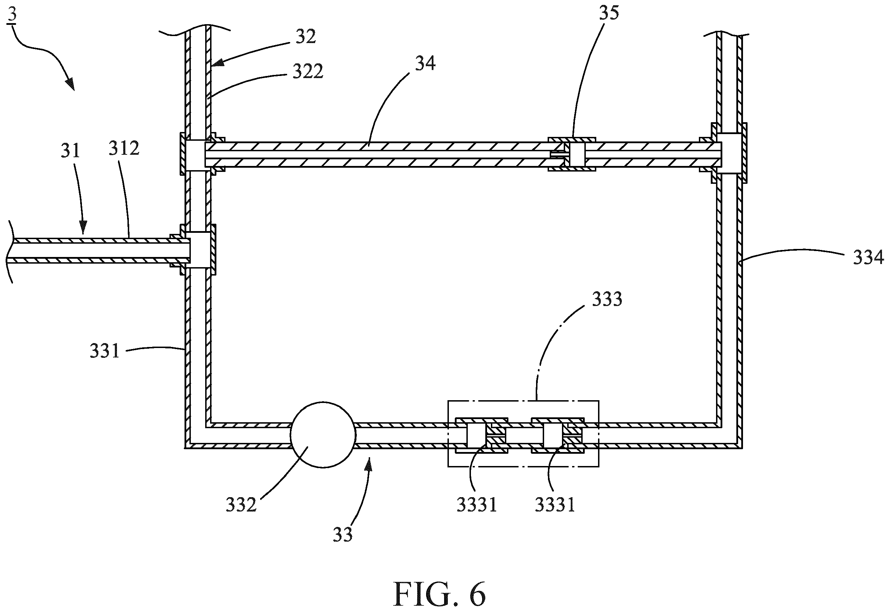

Referring to Fig. **6** showing a second preferred embodiment of a hydrogen water machine **3** of this invention includes the same correlated elements, the same concatenation of elements, and the same operation and objectives as those of the first preferred embodiment. This embodiment is characterised in that the first atomizer **333** has at least two mixing units **3331** fitted on the third duct **331.** The mixing units **3331** are spaced apart from each other. Each mixing unit **3331** further has a connected passage **3332.** A passage diameter of the connected passage **3332** is smaller than a diameter of the third duct **331.** Here takes that the first atomizer **333** has two mixing units **3331** disposed on the third duct **331** as an example. Further, a second atomizer **35** is applied to the recirculation pipe **34** in order to better the mixing effect. The second atomizer **35** is capable of atomizing the hydrogen water in the recirculation pipe **34.** The recirculation pipe **34** further delivers the hydrogen water which is processed by the second atomizer **35** to the second duct **322** for the following operation.

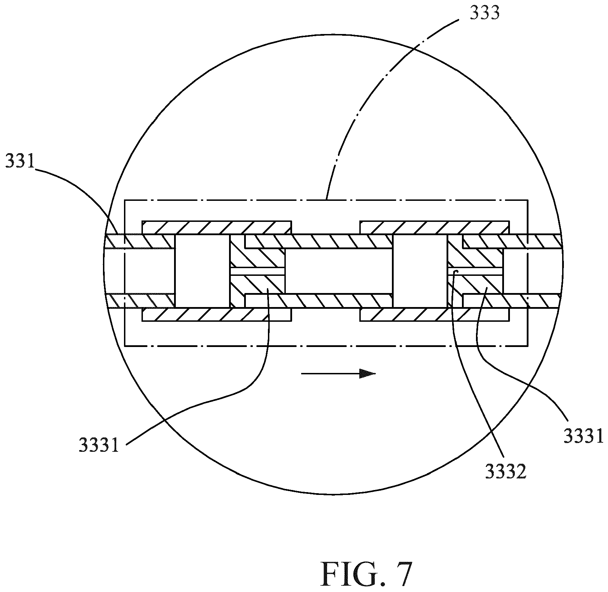

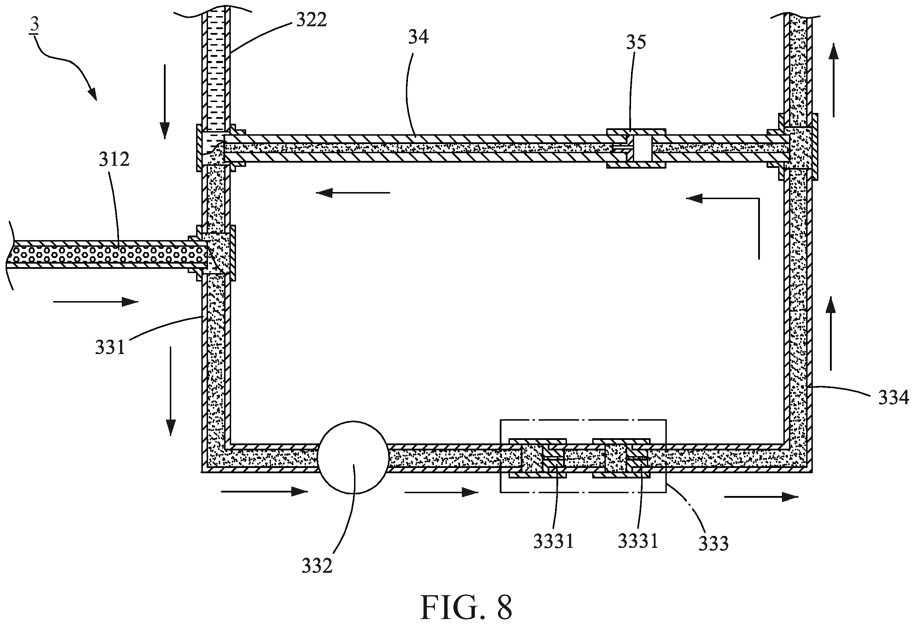

Referring to Figs. **7** and **8****,** in the use of the hydrogen water machine **3,** when the hydrogen and the water that are in the third duct **331** are pressured by the pressurizer **332** and delivered to the first atomizer **333,** because the passage diameter of the connected passage **3332** is smaller than the diameter of the third duct **331,** the semi-finished hydrogen water which is generated by the primary combination between the water and the hydrogen is sprayed by one of the mixing units **3331** in order to atomize the semi-finished hydrogen water which passes through the connected passage **3332** into the hydrogen water. Further, because the third duct **331** is full of the hydrogen and the pressurizer **332** keeps applying pressure to the water and the hydrogen in the third duct **331,** the dissolving effect of the hydrogen is increased under the high pressure and the amount of dissolving the hydrogen in the water is raised by the atomizing operation, thereby enhancing the mixing effect between the hydrogen and the water greatly. After the hydrogen water passes through one of the mixing units **3331,** the hydrogen water is then compressed, atomized and mixed by the other mixing unit **3331** to better the hydrogen concentration of the hydrogen water and increase the mixing time between the hydrogen and the water whereby the hydrogen and the water are mixed to provide the hydrogen water with the high concentration of the hydrogen. Further, when the hydrogen water is delivered by the fourth duct **334** for drinking, part of the hydrogen water enters the recirculation pipe **34** for being pressurized and atomized again by the second atomizer **35** which is fitted on the recirculation pipe **34.** Therefore, the amount of dissolving the hydrogen in the water is enlarged to attain a preferable solubility between the hydrogen and the water and the time of dissolving the hydrogen in the water is prolonged to raise the stability of the hydrogen concentration of the hydrogen water after the hydrogen water is provided.

To sum up, the hydrogen water machine of this invention takes an advantage of the recirculation pipe fitted between the mixing device and the water supplier to allow part of the hydrogen water in the fourth duct of the mixing device to enter the second duct again, mix with the water in the second duct and combine with the hydrogen in the mixing device to better the mixing effect between the hydrogen and the water effectively and steady the hydrogen concentration of the provided hydrogen water.

## Claims

1. A hydrogen water machine (3) comprising a hydrogen generator (31) generating hydrogen, a water supplier (32) delivering water, and a mixing device (33) combining said hydrogen and said water, said hydrogen generator (31) having a hydrogen source (311) capable of generating hydrogen and a first duct (312) connected with said hydrogen source (311) for delivering said hydrogen, said water supplier (32) having a water source (321) for accommodating water and a second duct (322) connected with said water source (321) for delivering said water;
**characterized in that** said mixing device (33) having a third duct (331) with a mixing passage (3311) communicating with said first duct (312) and said second duct (322) respectively for allowing said hydrogen of said first duct (312) mixing with said water of said second duct (322) in said mixing passage (3311) to generate semi-finished hydrogen water, a pressurizer (332) mounted on a first section of said third duct (331) downstream of said mixing passage (3311) to subject said semi-finished hydrogen water to pressurization that allows said hydrogen to be dissolved in said water, a first atomizer (333) disposed on a second section of said third duct (331) downstream of said first section to subject
said semi-finished hydrogen water to atomization that increases an amount of dissolving said hydrogen in said water for generating hydrogen water, and a fourth duct (334) connected with said first atomizer (333) and downstream of said second section of said third
duct (331) for receiving and delivering said hydrogen water, a recirculation pipe (34) being connected between said second duct (322) and said fourth duct (334) to allow part of said hydrogen water in said fourth duct (334) to enter said second duct (322) through said recirculation pipe (34) for reusing.

2. The hydrogen water machine (3) as claimed in claim 1, wherein a pipe diameter of said recirculation pipe (34) is smaller than a duct diameter of said fourth duct (334).

3. The hydrogen water machine (3) as claimed in claim 1, wherein said first atomizer (333) has at least two spaced-apart mixing units (3331) disposed on said second section of said third duct (331), each of said mixing units (3331) having a connected passage (3332), the diameter of said connected passage (3332) being smaller than a diameter of said third duct (331).

4. The hydrogen water machine (3) as claimed in claim 1, further having a second atomizer (35) disposed on said recirculation pipe (34) for turning said hydrogen water which enters said recirculation pipe (34) into mist, thereby delivering said hydrogen water processed by said second atomizer (35) to said second duct (322) through said recirculation pipe (34).

## Patentansprüche

1. Wasserstoff-Wassermaschine (3) mit einem Wasserstoffgenerator (31), der Wasserstoff erzeugt, einer Wasserversorgung (32), die Wasser liefert, und einer Mischvorrichtung (33), die den Wasserstoff und das Wasser kombiniert, der Wasserstoffgenerator (31) umfasst eine Wasserstoffquelle (311), die Wasserstoff erzeugen kann, und eine erste Leitung (312), die mit der Wasserstoffquelle (311) verbunden ist, um den Wasserstoff auszuliefern, die Wasserversorgung (32) umfasst eine Wasserquelle (321), um Wasser aufzunehmen, und eine zweite Leitung (322), die mit der Wasserquelle (321) verbunden ist, um das Wasser auszuliefern;
**gekennzeichnet dadurch, dass** die Mischvorrichtung (33) eine dritte Leitung (331) umfasst, mit einem Mischdurchgang (3311), der mit besagter erster Leitung (312) bzw. der zweiten Leitung (322) in Verbindung steht, damit der Wasserstoff der ersten Leitung (312) sich mit dem Wasser der zweiten Leitung (322) in dem Mischdurchgang (3311) vermischt, um halbfertiges hydriertes Wasser zu erzeugen, einen Druckhalter (332), der auf einen ersten Abschnitt der dritten Leitung (331) montiert ist, dem Mischdurchgang (3311) nachgeschaltet, um das halbfertige hydrierte Wasser mit Druck zu beaufschlagen, wodurch der Wasserstoff in dem Wasser aufgelöst wird, einen ersten Zerstäuber (333), der auf einem zweiten Abschnitt der dritten Leitung (331) angeordnet ist, dem ersten Abschnitt nachgeschaltet, um das halbfertige hydrierte Wasser zu zerstäuben, das die Menge zum Auflösen des Wasserstoffs in dem Wasser steigert, zur Erzeugung von hydriertem Wasser, und eine vierte Leitung (334), die mit dem ersten Zerstäuber (333) verbunden und dem zweitem Abschnitt der dritten Leitung (331) nachgeschaltet ist, zum Empfangen und Ausliefern des hydrierten Wassers, wobei ein Umlaufrohr (34) zwischen der zweiten Leitung (322) und der vierten Leitung (334) angeschlossen ist, damit ein Teil des hydrierten Wassers in der vierten Leitung (334) durch das Umlaufrohr (34) in die zweite Leitung (322) gelangen kann, zur Wiederverwendung.

2. Wasserstoff-Wassermaschine (3) nach Anspruch 1, wobei ein Rohrdurchmesser des Umlaufrohrs (34) kleiner ist als ein Leitungsdurchmesser der vierten Leitung (334).

3. Wasserstoff-Wassermaschine (3) nach Anspruch 1, wobei der erste Zerstäuber (333) mindestens zwei beabstandete Mischeinheiten (3331) umfasst, die auf dem zweiten Abschnitt der dritten Leitung (331) angeordnet sind, wobei jede der Mischeinheiten (3331) einen verbundenen Durchgang (3332) umfasst und der Durchmesser des verbundenen Durchgangs (3332) kleiner als ein Durchmesser der dritten Leitung (331) ist.

4. Wasserstoff-Wassermaschine (3) nach Anspruch 1, die des weiteren einen zweiten Zerstäuber (35) umfasst, der auf dem Umlaufrohr (34) angeordnet ist, um das hydrierte Wasser, das in das Umlaufrohr (34) eintritt, in Sprühnebel zu verwandeln und dadurch das hydrierte Wasser, das von dem zweiten Zerstäuber (35) verarbeitet wird, durch das Umlaufrohr (34) zu der zweiten Leitung (322) zu liefern.

## Revendications

1. Machine à eau hydrogénée (3) comprenant un générateur d'hydrogène (31) générant de l'hydrogène, un dispositif d'alimentation en eau (32) distribuant de l'eau, et un dispositif de mélange (33) combinant ledit hydrogène et ladite eau, ledit générateur d'hydrogène (31) ayant une source d'hydrogène (311) capable de générer de l'hydrogène et un premier conduit (312) relié à ladite source d'hydrogène (311) pour distribuer ledit hydrogène, ledit dispositif d'alimentation en eau (32) ayant une source d'eau (321) pour recevoir de l'eau et un deuxième conduit (322) relié à ladite source d'eau (321) pour distribuer ladite eau ;
**caractérisée par le fait que** ledit dispositif de mélange (33) a un troisième conduit (331) avec un passage de mélange (3311) en communication avec ledit premier conduit (312) et ledit deuxième conduit (322), respectivement, pour permettre audit hydrogène dudit premier conduit (312) de se mélanger avec ladite eau dudit deuxième conduit (322) dans ledit passage de mélange (3311) pour générer de l'eau hydrogénée semi-finie, un pressuriseur (332) monté sur une première section dudit troisième conduit (331) en aval dudit passage de mélange (3311) pour soumettre ladite eau hydrogénée semi-finie à une mise sous pression qui permet audit hydrogène d'être dissous dans ladite eau, un premier atomiseur (333) disposé sur une seconde section dudit troisième conduit (331) en aval de ladite première section pour soumettre ladite eau hydrogénée semi-finie à une atomisation qui augmente une quantité de dissolution dudit hydrogène dans ladite eau pour générer de l'eau hydrogénée, et un quatrième conduit (334) relié audit premier atomiseur (333) et en aval de ladite seconde section dudit troisième conduit (331) pour recevoir et distribuer ladite eau hydrogénée, un tuyau de recirculation (34) étant relié entre ledit deuxième conduit (322) et ledit quatrième conduit (334) pour permettre à une partie de ladite eau hydrogénée dans ledit quatrième conduit (334) d'entrer dans ledit deuxième conduit (322) à travers ledit tuyau de recirculation (34) en vue d'une réutilisation.

2. Machine à eau hydrogénée (3) selon la revendication 1, dans laquelle un diamètre de tuyau dudit tuyau de recirculation (34) est plus petit qu'un diamètre de conduit dudit quatrième conduit (334).

3. Machine à eau hydrogénée (3) selon la revendication 1, dans laquelle ledit premier atomiseur (333) a au moins deux unités de mélange espacées (3331) disposées sur ladite seconde section dudit troisième conduit (331), chacune desdites unités de mélange (3331) ayant un passage relié (3332), le diamètre dudit passage relié (3332) étant plus petit qu'un diamètre dudit troisième conduit (331).

4. Machine à eau hydrogénée (3) selon la revendication 1, ayant en outre un second atomiseur (35) disposé sur ledit tuyau de recirculation (34) pour transformer en brume ladite eau hydrogénée qui entre dans ledit tuyau de recirculation (34), distribuant ainsi ladite eau hydrogénée traitée par ledit second atomiseur (35) audit deuxième conduit (322) à travers ledit tuyau de recirculation (34).
